Europäisches Patentamt

European Patent Office

Office européen des brevets

(19)

(11) Publication number: **0 010 746**
**B1**

# EUROPEAN PATENT SPECIFICATION

(45) Date of publication of patent specification: **21.03.84**

(21) Application number: **79104158.5**

(22) Date of filing: **26.10.79**

(51) Int. Cl.³: **C 08 F 10/00, C 08 F 4/62, C 08 F 4/02**

(54) Catalyst components and catalysts for the polymerization of olefins; the use thereof.

(30) Priority: **26.10.78 IT 2914078**

(43) Date of publication of application:
**14.05.80 Bulletin 80/10**

(45) Publication of the grant of the patent:
**21.03.84 Bulletin 84/12**

(84) Designated Contracting States:
**BE DE FR GB IT NL**

(56) References cited:
**FR - A - 2 353 572**
**US - A - 4 006 101**
**US - A - 4 120 820**

(73) Proprietor: **Montedison S.p.A.**
**Patents & Licensing Dept. Foro Buonaparte, 31**
**P.O. Box 10528**
**I-20121 Milan (IT)**

(72) Inventor: **Zucchini, Umberto**
**11, Via G. Leopardi**
**Ferrara (IT)**
Inventor: **Pennini, Gianni, Dr.**
**190, Via Ladino**
**Porotto, Ferrara (IT)**
Inventor: **Cuffiani, Illaro**
**33, Via Bagaro**
**Ferrara (IT)**

(74) Representative: **Zumstein, Fritz sen., Dr. et al,**
**Dr. F. Zumstein sen. Dr. E. Assmann Dr. R.**
**Koenigsberger Dipl.-Ing. F. Klingseisen Dr. F.**
**Zumstein jun. Bräuhausstrasse 4**
**D-8000 München 2 (DE)**

**The file contains technical information
submitted after the application was filed and not
included in this specification**

Courier Press, Leamington Spa, England.

# 0 010 746

Catalyst components and catalysts for the polymerization of olefins; the use thereof

The present invention concerns new catalyst components for the polymerization of olefins, the catalysts obtained therefrom and their use, in particular, in the polymerization of ethylene or mixtures thereof with minor proportions of alpha-olefins $CH_2=CHR_2$ wherein $R_2$ is an alkyl or aryl radical with from 1 to 8 carbon atoms, or in the polymerization of said alpha-olefins and the mixtures thereof with minor proportions of ethylene.

In the polymerization processes of ethylene and of its mixtures with alpha-olefins, the need of disposing of catalysts endowed with a high activity which, besides enabling avoidance of the purification phase of the polymer for freeing it from catalyst residues, will enable a polymer with a narrow distribution of molecular weights to be obtained, is felt in a particular way.

There are already known catalysts that achieve this object.

The methods so far known for the preparation of these catalysts are, however, rather burdensome in as much as they involve in general the reduction of a tetravalent Ti alcoholate with an Al-alkyl halide complexed with a Mg dihalide, or the reaction of the Ti alcoholate in the form of a complex with a Mg dihalide.

US—A—4 006 101 describes a catalyst composition consisting essentially of Ti and/or V halide and a component which is the reaction product of an anhydrous magnesium halide, a compound ROH wherein R is an organic group of 1 to 20 carbon atoms and silicon tetrachloride. It is also known from US—A—4 120 820 that a complex of a trivalent titanium halide with water or an organic electron donor, an organomagnesium component, and a halide source can be used as a catalyst component in olefin polymerization processes in order to produce polymers from which catalyst residues need not be removed. However, the order of reaction for preparing these catalysts is quite different from the order of reaction for preparing the catalysts of the invention and therefore cannot result in the present improved catalyst.

There has now, unexpectedly, been found a simplified method for the preparation of catalyst components for the polymerization of ethylene and its mixtures with $CH_2=CHR_2$ alpha-olefins, wherein $R_2$ has the already indicated meaning, which enable high yields of polymers with a sufficiently narrow distribution of the molecular weight to be obtained.

This method consists in reacting in an apolar solvent:
a) the product of the reaction between:

   a.1) a compound of the trivalent Ti or V of the formula $MeR_nX_{3-n}$ wherein Me is Ti or V, $R$ is a group $OR'$, $NR'_2$ or $OCOR'$ wherein $R'$ is an alkyl, a cycloalkyl or aryl radical with from 1 to 12 carbon atoms, $X$ is a halogen and $0 \leq n \leq 3$,

   a.2) an organic compound containing at least one OH group chosen from the aliphatic, cycloaliphatic and aromatic alcohols and thioalcohols having from 1 to 18 carbon atoms, the phenols and thiophenols having from 6—18 carbon atoms and the sylanols $R'_pSi(OH)_{4-p}$ wherein $R'$ has the meaning already indicated before and $1 \leq p \leq 3$, and

   a.3) a Mg compound chosen from Mg oxide and hydroxide, Mg salts of inorganic oxygen containing acids and $R''_qMgX_{2-q}$ compounds, wherein $R''$ is a radical $OR'$, OH or $OCOR'$ where $R'$ has the meaning already indicated X is halogen, and $0 \leq q \leq 2$; with

b) a compound capable of reacting with the OH groups of compound a.2) when the Mg compound is a dihalide, and of reacting with such groups and contemporaneously converting at least partially the Mg compound to dihalide when the Mg compound is other than a dihalide.

Compound a.1) is preferably a Ti trihalide, in particular $TiCl_3$ or $TiBr_3$; but it may also be a Ti halogen-alcoholate.

Compound a.2) is preferably an aliphatic alcohol, such as for instance ethanol, n-butanol, 2-ethylhexanol, octanol, or a phenol such as for instance phenol or p-cresol.

Examples of sylanols are: trimethylsylanol, triphenylsilanol, diphenylsilandiol.

Compound a.3) is preferably a Mg dihalide, such as for instance $MgCl_2$ or $MgBr_2$, a Mg dialcoholate or chloro-alcoholate such as for instance; $ClMgOC_2H_5$, $Mg(O-n-C_4H_9)_2$, or a Mg carboxylate, such as for instance Mg acetate, Mg oxide or hydroxide or a Mg salt of an oxygen containing inorganic acid, such as for instance basic Mg carbonate, a metallorganic Mg compound such as $ClMg-n-C_4H_9$, $ClMgC_2H_5$, $n-C_4H_9-Mg-O-n-C_4H_9$, $Mg(sec-C_4H_9)_2$ and their complexes with ethers.

The Mg compound, may contain in the form of a complex, a compound capable of reacting as compound b): in this case the use of the compound as indicated in b) becomes superfluous. An example of these complexes is $MgCl_2\cdot2Al.(C_2H_5)Cl$.

Compound b), in the case the Mg compound is dihalide, is either an Al-trialkyl or an Al-alkyl halide, such as for instance: $Al(C_2H_5)_3$, $Al(C_2H_5)Cl_2$, $Al(C_2H_5)_2Cl$ or $SiCl_4$, a halogen-silane such as $Cl_3SiCH_3$, $ClSi(CH_3)_3$, $Cl_3SiH$ a halide such as $AlCl_3$, $SnCl_4$, $TiCl_4$, $BCl_3$, or a hydrogen halide e.g. HCl.

When the Mg compound is other than a Mg dihalide, there is used a halogenating agent chosen preferably from $SiCl_4$, $TiCl_4$, $Al(C_2H_5)Cl_2$, and hydrogen halides such as for instance HCl or HBr.

Compound a.2) is used in quantities of at least 2 and up to 50 moles per mole of Ti compound a.1).

2

The ratio in moles between compounds a.1) and a.3) ranges from 1:50 to 10:1, and preferably between 1:5 and 2.5:1.

Compound b) is used in quantities greater than 0.2 moles per mole of compound a.2). In general there are used ratios 1:1 or slightly greater. Greater ratios are superfluous.

Preferably, the Ti compound, the Mg compound (preferably $TiCl_3$ and $MgCl_2$ respectively) and the alcohol are made to react in a halogenated hydrocarbon solvent, such as dichloroethane, tetrachloroethane or trichloroethylene, in which dissolution of the reaction product occurs.

The soltution is then made to react with compound b).

According to an alternative, the Ti and Mg compounds, preferably $TiCl_3$ and $MgCl_2$ respectively, are made to react separately with the alcohol in a hydrocarbon solvent in which dissolution of the formed complexes occurs. The two solutions are then combined and made to react with compound b).

The reaction with compound b) in general is carried out at temperatures between room temperature and 150°C.

Another method of preparation of the catalytic component that allows to obtain catalysts capable of producing polymers with a controlled morphology, in particular with a narrow particle size distribution, consists in emulsifying in a hydrocarbon solvent an adduct in the molten state of Mg chloride with the alcohol, then adding under stirring the Ti compound or its reaction product with the alcohol, and cooling down the mixture in order to solidify the particles forming the emulsion.

The resulting suspension or the solid product separated from it are then reacted with compound b).

From the catalytic components of the invention, by reaction with Al-trialkyls or Al-alkyl halides, such as for instance $Al(C_2H_5)_3$, $Al(n-C_4H_9)_3$ and $Al(C_2H_5)_2Cl$, there are obtained catalysts particularly suited for the polymerization of ethylene and of mixtures thereof with minor proportions of alpha-olefines.

The Al/Ti ratio in the catalyst, in general, is comprised between 1 and 1000.

The polymerization is carried out according to known methods in a liquid phase, in the presence of an inert hydrocarbon diluent, or in a gaseous phase.

It was furthermore found that the catalyst components of this invention can be advantageously used in the polymerization of the alpha-olefins $CH_2=CHR_2$ wherein $R_2$ is an alkyl or aryl radical with from 1 to 8 carbon atoms, or mixtures of said olefins with minor proportions of ethylene, provided that the components contain, in a chemically combined form, an electron-donor compound in an amount between 0.2 and 3 moles per g-atom of Ti or V present in the components.

The electron-donor compound preferably is an alkyl, cycloalkyl or aryl ester of an aromatic acid, as for example an alkyl ester of benzoic acid or of p-toluic acid. Examples of said esters are ethyl benzoate and methyl p-toluate.

The electron-donor compound is reacted with compound a.1) and/or a.2) or with the reaction product a) or during the reaction of a) with b).

Preferably compound a.1) is $TiCl_3$, compound a.2) is an aliphatic or cycloaliphatic alcohol containing from 4 to 16 carbon atoms, as for instance n-butanol or 2-ethylhexanol, and compound a.3) is $MgCl_2$.

$TiCl_3$, the alcohol and $MgCl_2$ are reacted in the presence of a hydrocarbon solvent under such conditions of temperature and of proportion of alcohol with respect to $MgCl_2$ that a solution is obtained. The solution is then reacted with $TiCl_4$ first at room or lower temperature and successively at a higher temperature, i.e. at 60°C or more.

The catalyst components containing the electron-donor compound are used in admixture with Al-alkyl compounds to form, according to known methods, catalysts for the stereo-specific polymerization of the alpha-olefins $CH_2=CHR_2$ wherein $R_2$ has the meaning hereinbefore explained, or mixtures thereof with minor proportions of ethylene.

The polymerization of the alpha-olefins is carried out according to known methods in liquid or gas phase, at a temperature generally between 50 and 90°C.

In general, one operates at temperatures from 50° to 150°C.

The examples that follow are given merely for the purpose of illustrating and not limiting the invention.

### Example 1

Into a 250 cc flask, provided with a stirrer, a dropping funnel and a reflux cooler, there were introduced, in any desired order, and in a nitrogen atmosphere: 3.4 g (35.7 mMols) of anhydrous $MgCl_2$, 7 g (34.5 mMols of Ti) of $TiCl_3.1/3AlCl_3$ (Kronos ATR 1080® with Ti = 23.6%) and 50 cc of anhydrous 1.2-dichloroethane.

Into this suspension were thereupon dripped, under stirring, 16.4 cc (284 mMols) of anhydrous ethyl alcohol. The suspension was then reflux-heated and maintained at this temperature for about one hour until a clear solution of a green colour was obtained.

Into this solution, maintained at 50°C and under stirring, there were then dripped, in 1.5 hours, 32.2 cc (280 mM) of $SiCl_4$; thereafter the reaction mass was reflux-heated for 3 hours.

The red-brown suspension thus obtained was then cooled down to 50°C and, after decanting, the liquid phase was removed from it by siphoning.

The solid residue was then washed once with about 100 cc of 1.2-dichloroethane, and then several times, at room temperature, with portions of about 100 cc of anhydrous hexane each time, up to disappearance of the chlorine ions from the washing solvent.

The solid was then dried under vacuum (10—20 mmHg) at 50°C for 3 hours. Thereby were obtained 10.7 g of a catalytic solid containing 14.15% of Ti.

The polymerization test of ethylene was carried out in a 2.5 lt autoclave fitted with a stirrer, by introducing into the same in the given order: 1000 cc of anhydrous hexane, 1.5 g of Al-i-Bu$_3$, 0.0121 g of catalytic solid, 3 kg/cm$^2$ of hydrogen, and by then bringing the total pressure up to 14 kg/sq.cm with ethylene. These conditions were maintained for 4 hours at 75°C and there were obtained 302 g of polyethylene (see Table 1).

## Example 2

Example 1 was repeated, but using:

5.3 g (26 mMols) of Ti) TiCl$_3$.1/3AlCl$_3$; 5 g of MgCl$_2$ (52.6 mM); 50 cc of 1.2-dichloroethane; 18.3 cc of anhydrous ethyl alcohol (316 mM); 36 cc of SiCl$_4$ (313 mM).

Thereby were obtained 6.3 g of a brown, catalytic solid containing 6.45% of Ti. Thereupon was repeated the polymerization test of example 1, but using 0.0091 g of catalytic solid thereby obtaining 273 g of polyethylene (Table 1).

## Example 3

There was repeated example 1, but using:

5.3 g (26 mM of Ti) of TiCl$_3$.1/3AlCl$_3$; 10 g of MgCl$_2$ (105 mM) 70 cc of 1.2-dichloroethane; 30.4 cc (525 mM) of anhydrous ethyl alcohol; 60.3 cc (525 mM) of SiCl$_4$.

Thereby were obtained 15.5 g of a brown catalytic solid containing 2.8% of Ti.

The polymerization test of example 1 was repeated, but using 0.0079 g of catalytic solid and obtaining 90 g of polyethylene (Table 1).

## Example 4

Example 1 was repeated, but using:

10.15 g (50 mM of Ti) of TiCl$_3$.1/3AlCl$_3$; 70 cc of 1.2-dichloroethane; 22 cc (380 mMols) anhydrous ethyl alcohol; 45 cc (392 mMols) of SiCl$_4$. .

There were obtained 6.2 g of a brown catalytic solid containing 19.1% of Ti.

Thereupon was repeated the polymerization test of example 1, but using 0.0157 g of catalytic solid and obtaining 208 g of polyethylene (Table 1).

## Example 5

There was repeated example 1, but using:

7.0 g (34.5 mM Ti) of TiCl$_3$.1/3AlCl$_3$; 3.4 g (35.7 mM) MgCl$_2$; 50 cc of 1.2-dichloroethane; 16.4 cc (284 mM) anhydrous ethyl alcohol; 16.1 cc (140 mM) of SiCl$_4$.

Thereby were obtained 8.9 g of a brown catalytic solid containing 14.3% of Ti.

Thereupon was repeated the polymerization test of example 1, but using 0.0142 g of catalytic solid thereby obtaining 180 g of polyethylene (Table 1).

## Example 6

Example 1 was repeated but using:

7.0 g (34.5 mM Ti) of TiCl$_3$.1/3AlCl$_3$; 3.4 g (35.7 mM) of MgCl$_2$; 50 cc 1.2-dichloroethane; 16.4 cc (284 mM) of anhydrous ethyl alcohol; 64.4 cc (560 mM) of SiCl$_4$.

Thereby were obtained 9.1 g of a brown catalytic solid containing 15% of Ti.

Thereupon was repeated the polymerization test of example 1, but using 0.0159 g of catalytic solid and obtaining 380 g of polyethylene (Table 1).

## Example 7

In two small flasks were separately carried out the dissolutions of MgCl$_2$ and of TiCl$_3$.1/3AlCl$_3$.

In one small flask, at reflux temperature, were heated up for 30 minutes:

3.4 g (35.7 mM) of MgCl$_2$; 8.2 cc (142 mM) anhydrous ethyl alcohol; 30 cc of anhydrous trichloroethylene; and there was obtained a solution.

In the other small flask were heated up for 30 minutes at reflux temperature:

7.0 g (34.5 mM Ti) of TiCl$_3$.1/3AlCl$_3$; 16.4 cc (284 mM) anhydrous ethyl alcohol; 70 cc anhydrous trichloroethylene and there was obtained the other solution.

These two solutions were then combined in a flask kept at 50°C, and into this flask were fed in 1.5 hours, 49 cc (427 mM) of SiCl$_4$.

The reaction product (a brown suspension) was, thereupon, heated up for 3 hours at reflux temperature and finally washed and dried as described in example 1.

There were obtained 8.5 g of a brown catalytic solid containing 16% of Ti.

The polymerization test of example 1 was repeated, but using 0.015 g of catalytic solid, thereby obtaining 115 g of polyethylene (see Table 1).

4

# 0 010 746

## Example 8

Operating according to the same procedure described in example 1, in a small flask was prepared a solution consisting of:

3.5 g (17.2 mM of Ti) of $TiCl_3.1/3AlCl_3$; 3.2 g (33.6 mM) $MgCl_2$; 50 cc of 1.2-dichloroethane; 12 cc (207 mM) anhydrous ethyl alcohol.

This solution was added dropwise in 1.5 hours to a suspension (maintained at 50°C) of 13.8 g (104 mM) of $AlCl_3$ in 30 cc of 1.2-dichloroethane.

After heating at reflux temperature for 2 hours, the suspension was treated as described in example 1.

Thereby were obtained 3.4 g of a brown catalytic solid which containing 11.35% of Ti.

Thereupon, the polymerization test of example 1 was repeated but using 0.0104 g of catalytic solid and 160 grams of polyethylene were obtained (see Table 1).

## Example 9

Operating according to the same procedure described in example 1, there was prepared in a small flask a solution of the following composition:

5.7 g (28 mM Ti) of $TiCl_3.1/3AlCl_3$; 5.3 g (55.6 mM) of $MgCl_2$; 80 cc of 1.2-dichloroethane; 19.7 cc (340 mM) of anhydrous ethyl alcohol.

To the solution thus obtained, maintained at a temperature of 20°C, there were added in 2 hours 190 cc of a heptane solution containing 19.4 g (170 mM) of $Al(C_2H_5)_3$.

Once the feeding had been completed, the suspension was heated for 2 hours at reflux temperature.

The suspension was then treated as described in example 1. Thereby were obtained 8.6 g of a brown catalytic solid containing 9.65% of Ti.

Thereupon the polymerization test of example 1 was repeated but using 0.0128 g of catalytic solid, thereby obtaining 150 g of polyethylene (Table 1).

## Example 10

In a small flask the following components were heated for one hour at reflux temperature:

6.1 g (30 mM Ti) $TiCl_3.1/3AlCl_3$; 25 cc of dichloroethane; 10.8 cc (187 mM) of anhydrous ethyl alcohol; and there was obtained a solution.

In the same way was prepared a solution starting from:

3.15 g (30 mM) of $ClMgOC_2H_5$; 30 cc of 1.2-dichloroethane; 7 cc (121 mM) of anhydrous ethyl alcohol.

The two solutions were combined and added with 16 cc (139 mM of $SiCl_4$ according to the same procedure of example 1.

There were obtained 3.9 g of a brown catalytic solid containing 12.25% of Ti.

Thereupon the polymerization test of example 1 was repeated, but using 0.0136 g of catalytic solid and obtaining 272 g of polyethylene (see Table 1).

## Example 11

In a flask the following reactants were put into contact with each other for 1.5 hours and at reflux temperature:

4 g (42 mM) of $MgCl_2$; 15 cc of 1.2-dichloroethane; 15.4 cc (168 mM) of anhydrous n-butyl alcohol; and there was obtained a solution (provided the temperature was at least 50°C). Analogously there was prepared another solution with:

3.23 g (21 mMols) $TiCl_3$ of the HR type; 75 cc of 1.2-dichloroethane; 7.7 cc (84 mM) of anhydrous n-butyl alcohol. The two solutions were thereupon combined and added with 56.7 cc (494 mM) of $SiCl_4$, following the same procedure described in example 1.

Thereby were obtained 4.5 g of a brown catalytic solid containing 5.55% of Ti.

The polymerization test of example 1 was repeated but using 0.0075 g of catalytic solid and obtaining 221 g of polyethylene (Table 2).

## Example 12

The following components were made to react with each other at 70°C for 1 hour:

5.7 g (29 mMols of Ti ($TiCl_3.1/3AlCl_3$; 30 cc of 1.2-dichloroethane; 10.5 cc (115 mMols) of anhydrous n-butyl alcohol; and there was obtained a solution (stable at a temperature of at least 70°C).

Analogously, there was prepared a solution with:

5 g (52 mM) of $MgCl_2$; 55 cc of 1.2-dichloroethane; 25 cc (230 mM) of anhydrous isoamyl alcohol.

The two solutions were combined at 70°C and the new solution thus obtained was fed dropwise in 2 hours into a solution of 65 cc (566 mMols) of $SiCl_4$ in 70 cc of 1.2-dichloroethane maintained at 60°C.

The suspension thus obtained was then treated as described in example 1.

There were obtained 9.1 g of brown catalytic solid containing 10.8% of Ti. Thereupon the

5

polymerization test of example 1 was repeated but using 0.0104 g of catalytic solid, and there were obtained 226 g of polyethylene (Table 2).

### Example 13

Following the same procedure described in example 1, a solution was prepared by reacting:
9.914 g (4.5 mM of Ti) of $TiCl_3.1/3AlCl_3$; 0.286 g (3 mMols) of $MgCl_2$; 5.6 cc (36 mM) of anhydrous 2-ethylhexyl alcohol; 20 cc anhydrous toluene.
To this solution were then added, following the same procedure already described in example 1:
7 cc (61 mM) of $SiCl_4$.
Thereby were obtained 1.9 g of a brown catalytic solid containing 9.46% of Ti.
Thereupon there was repeated the polymerization test of example 1, but using 0.0098 g of catalytic solid and obtaining 134 g of polyethylene (Table 2).

### Example 14

At reflux temperature and for 5 hours the following reagents were made to react:
4 g (42 mMols) of $MgCl_2$; 50 cc of n-hexane; 26.2 cc (167 mM) of anhydrous 2-ethylhexyl alcohol. Thereby was obtained a solution stable also at room temperature.
Analogously, there was prepared a second solution by reacting at 70°C for 2 hours:
1.74 g (8.5 mM of Ti) of $TiCl_3.1/3AlCl_3$; 19 cc of anhydrous toluene; 6.7 cc (43 mM) of anhydrous 2-ethylhexyl alcohol, this solution being stable at room temperature.
The two combined solutions were then dripped in 1.5 hours into a solution consisting of 14.25 g (118 mM) of $Al(C_2H_5)_2Cl$ and of 40 cc of n-hexane, maintained at 50°C.
The suspension thus obtained was thereupon treated as described in example 1, but carrying out all washings with n-hexane.
There were obtained 3.5 g of a catalytic solid containing 2.8% of Ti.
Thereupon the polymerization test of example 1 was repeated, but using 0.010 g of catalytic solid, and there were obtained 226 g of polyethylene (Table 2).

### Example 15

To 3.4 g (35.7 mM) of $MgCl_2$, suspended in 30 cc of 1.2-dichloroethane, were added in a flask 8.2 cc (142 mM) of anhydrous ethyl alcohol. On reflux heating for 1 hour there was obtained a complete dissolution.
In another flask there were reflux heated for 2 hours:
7.0 g (34.5 mM of Ti) of $TiCl_3.1/3AlCl_3$; 25 cc of 1.2-dichloroethane; 31 cc (352 mM) of phenol.
No dissolution occurred. Thereupon the liquid phase was removed from the solid brown residue.
This solid was added to the previously prepared $MgCl_2$ solution and into this mixture, maintained at 50°C, there were dripped in 1.5 hours 32.2 cc (280 mM) of $SiCl_4$.
The suspension thus obtained was thereupon treated as described in example 1.
There were thereby obtained 7.7 g of a brown catalytic solid containing 13.3% of Ti.
The polymerization test described in example 1 was repeated, but using 0.0048 g of the catalytic solid, thereby obtaining 158 g of polyethylene (Table 2).

### Example 16

To a solution obtained by heating for 1.5 hours, at reflux temperature:
7.0 g (34.5 mM of Ti) of $TiCl_3.1/3AlCl_3$; 67 cc of 1.2-dichloroethane; 12.6 cc (138 mM) of anhydrous n-butyl alcohol; there were added 3.3 g (34.6 mM) of $MgCl_2$ and then the mixture was refluxed for another 2 hours.
To the suspension thus obtained, there were added, over 1.5 hours and at 50°C, 16 cc (139 mM) of $SiCl_4$.
The reaction product was then treated as described in example 1.
Thereby were obtained 6.3 g of a catalytic solid containing 13.35% of Ti.
The polymerization test of example 1 was repeated but using 0.0154 g of catalytic solid, thereby obtaining 145 g of polyethylene (Table 2).

### Example 17

In a flask were made to react for 3 hours at 140°C:
7.5 g (78.7 mMols) of $MgCl_2$; 11.2 g (52.6 mMols) of $TiCl_3.1/3AlCl_3$; 50 cc of anhydrous Isopar G®; 57.4 cc (367 mMols) of 2-ethylhexyl alcohol; and there was obtained a solution which, after cooling down to room temperature, was dripped in 1 hour into a flask containing 400 cc (3650 mMols) of $TiCl_4$ maintained at 0°C and under vigorous stirring. Thereafter the reaction mixture was heated up to 80°C and maintained at this temperature for further 2 hours.
The precipitate that was thus formed was filtered at 80°C and then washed repeatedly with anhydrous hexane, first at 80°C and then at room temperature, until complete disappearance of the chlorine ions from the washing solvent.
After drying under the conditions described in example 1, there were obtained 14.1 g of a catalytic solid containing 12.1% of Ti.

# 0 010 746

Thereupon the polymerization test of example 1 was repeated, but using 0.0044 g of the above catalytic solid, thereby obtaining 266 g of polyethylene (see Table 2).

## Example 18

At 80°C were made to react for 4 hours:

4.95 g (23 mMols) of $TiCl_3.1/3AlCl_3$; 20 g (92.5 mMols) of diphenylsilandiol; 150 cc of 1.2-dichloroethane; thereby obtaining a brown-coloured solution, to which was admixed, at a temperature of 70°C, a solution likewise heated to 70°C, and obtained by reflux-reacting for 10 minutes:

2.2 g (23 mMols) of $MgCl_2$; 5.4 cc (92.5 mMols) of anhydrous ethyl alcohol; 20 cc of 1.2-dichloroethane.

Into the new suspension thus obtained and still maintained at 70°C, there were dripped 32 cc (279 mMols) of $SiCl_4$ during a period of 1 hour and a half. After heating the reaction mixture for further 3 hours at 70°C, the precipitate that was formed was filtered at 40°C, washed twice with 1.2-dichloroethane and finally with anhydrous hexane at room temperature until full disappearance of the chlorine ions from the washing solvent.

After drying, under the conditions described in example 1, there were obtained 5.8 g of a catalytic solid containing 15.35% of Ti.

Thereupon the polymerization test of example 1 was repeated, but using 0.0097 g of the above catalytic solid, thereby obtaining 43 g of polyethylene (see Table 2).

## Example 19
### (comparative test without $MgCl_2$)

Example 1 was exactly repeated but without the use of $MgCl_2$. Thereby were obtained 4.3 g of catalytic solid containing 28.5% of Ti.

The polymerization test of example 1 was repeated, but using 0.0696 g of catalytic solid, thereby obtaining 28 g of polyethylene (Table 3).

## Example 20

A solution was prepared by reflux heating for 30 minutes:

50 cc of 1.2-dichloroethane; 3.4 g (35.7 mM) of $MgCl_2$; 10.2 cc (175 mM) of anhydrous ethyl alcohol.

After the solution had been cooled down to 50°C, it was added with 7 g of $TiCl_3.1/3AlCl_3$ and then reflux heated again for 1 hour.

Thereupon the solution was brought down again to 50°C and to the mixture thus obtained were added 20.4 cc (178 mM) of $SiCl_4$, followed the procedure of example 1.

Thereby were obtained 7.5 g of a catalytic solid containing 15% of Ti.

The polymerization test of example 1 was repeated but using 0.0149 g of catalytic solid, thereby obtaining 322 g of polyethylene (Table 3).

## Example 21
### (use of $TiCl_4$ instead of $SiCl_4$)

Example 1 was repeated, but using 30.7 cc of $TiCl_4$ (280 mM) instead of $SiCl_4$.

Thereby were obtained 8 g of catalytic solid containing 19% of Ti

The polymerization test of example 1 was repeated but using 0.0075 g of catalytic solid, thereby obtaining 365 g of polyethylene (Table 3).

## Example 22

In this instance, example 2 was repeated, but using 34.5 cc (315 mMols) of $TiCl_4$ instead of $SiCl_4$.

Thereby were obtained 10.5 g of a catalytic solid containing 14.35% of Ti.

The polymerization test of example 1 was repeated, but using 0.0028 g of the above catalytic solid, thereby obtaining 250 g of polyethylene (see Table 3).

## Example 23

Operating in the same way as that described in Example 1, a solution was prepared which contained:

1.25 g (13 mMols) of $MgCl_2$; 3 cc (52 mMols) of anhydrous ethyl alcohol; 15 cc of 1.2-dichloroethane.

To this solution, maintained at 60°C, were added 4 g of $Ti(O-n-C_4H_9)_3$ and the whole was reflux-heated for 30 minutes. To the suspension thus obtained were added at 50°C 6 cc (52 mMols) of $SiCl_4$ and the whole was then heated for 5 hours at 80°C.

The solid thus obtained was filtered and then washed with anhydrous hexane until complete disappearance of the chlorine ions from the washing solvent.

After drying, under the conditions described in example 1, there were obtained 2.8 g of a catalytic solid which contained 11.75% of Ti.

Then there was repeated the polymerization test of Example 1, but using 0.0097 g of the above

7

catalytic solid, thereby obtaining 90 g of polyethylene (see Table 4).

## Example 24

Operating at 80°C, the following components were made to react with each other:

5.6 g (35 mMols) of $VCl_3$; 14.5 cc (249 mMols) of anhydrous ethyl alcohol; 50 cc of 1.2-dichloroethane; thereby obtaining a suspension which, at a temperature of 50°C, was admixed to a solution obtained by reacting, as described in Example 1:

3.4 g (35.7 mMols) of $MgCl_2$; 8.3 cc (142.5 mMols) of anhydrous ethyl alcohol; 30 cc of 1.2-dichloroethane.

Into the new suspension thus obtained were dripped, at 50°C, 45 cc (392 mMols) of $SiCl_4$. The suspension was then heated for 4 hours at 70°C, after which the catalytic solid was separated according to the procedure described in Example 1.

There were contained 11.6 g of a catalytic solid containing 14.05% of V.

The polymerization test of Example 1 was repeated, but using 0.0124 g of the above catalytic solid, thus obtaining 56 g of polyethylene (see Table 4).

## Example 25

Following the same procedure as that described in Example 1, the following substances were made to react with each other:

4.45 g (46.7 mMols) of $MgCl_2$; 4.95 g (23.2 mMols) of $TiCl_3.1/3AlCl_3$; 3.65 g (23 mMols) of $VCl_3$; 28.3 cc (487 mMols) of anhydrous ethyl alcohol; 90 cc of 1.2-dichloroethane.

To the suspension thus obtained were thereupon added, in 1.5 hours and at 50°C, 56 cc (487 mMols) of $SiCl_4$ and the mixture was then reflux-heated for 3 hours.

The process was proceeded as described in Example 1, until isolation of 11.3 g of a catalytic solid containing 1.30% of Ti and 9.65% of V.

The polymerization test of Example 1 was then repeated, but using 0.0121 g of the above catalytic solid, thereby obtaining 403 g of polyethylene (see Table 4).

## Example 26

Example 1 was repeated, but using 5.7 g (35.7 mMols) of $VCl_3$ instead of $TiCl_3.1/3AlCl_3$, and using 31.3 cc (285 mMols) of $TiCl_4$ instead of $SiCl_4$. Thereby were obtained 11.5 g of a catalytic solid containing 7.2% of Ti and 13.55% of V.

The polymerization test of Example 1 was then repeated, but using 0.011 g of the above catalytic solid, thereby obtaining 361 g of polyethylene (see Table 4).

## Example 27

Into a 250 cc flask, fitted with a stirrer, there were introduced:

9.55 g (100 mMols) of anhydrous $MgCl_2$; 2.15 g (10 mMols) of $TiCl_3.1/3AlCl_3$ (of the type used in Example 20); 80 cc of ISOPAR G®; 5.7 cc (40 mMols) of ethyl benzoate; 51.6 cc (330 mMols) of 2-ethyl-hexyl alcohol.

The suspension was then heated until dissolution (3 hours at 140°C).

The solution thus obtained was dripped for one hour, at 0°C, into 161.5 cc of a 26.6% heptane solution of $AlEt_2Cl$ (356 mMols). The mixture was thereupon heated at 80°C, thus obtaining the formation of a solid, and there were then introduced 1.4 cc (10 mMols) of ethyl benzoate.

After heating at 80°C for 2 hours, the liquid was separated at 80°C; the solid residue was then treated with 62 cc of a heptane solution of $AlEt_2Cl$ (137.4 mMols) for 2 hours at 80°C, whereafter the liquid was separated and the solid was washed with heptane at 80°C until disappearance of the chlorine-ions.

The drying was carried out as in Example 1 and 12.6 g of a catalytic solid containing 3.8% of Ti were obtained.

The polymerization test of propylene was carried out in a 2.5 lt autoclave fitted with a stirrer and containing 1000 cc of anhydrous hexane, 1 g of Al (i-Bu)$_3$, 0.253 g of methyl p-toluate, 0.100 g of catalytic solid and 300 Ncc of $H_2$, under a propylene pressure of 7 kg/cm². By operating for 4 hours at 60°C, there were obtained 190 g of polypropylene (see Table 5).

## Example 28

Into a 250 cc flask fitted with a stirrer there were introduced:

9.55 g (100 mMols) of anhydrous $MgCl_2$; 0.85 g (4 mMols) of $TiCl_3.1/3AlCl_3$; 80 cc of ISOPAR G®; 1.7 cc (11.9 mMols) of ethyl benzoate; 40.6 cc (260 mMols) of 2-ethyl-hexyl alcohol.

By heating the mixture for 3 hours at 140°C, there was obtained an opalescent solution which was dripped for 1 hr at 0°C, into 400 cc (3648 mMols) of $TiCl_4$. Thereupon the mixture was heated at 80°C, thereby obtaining the formation of a solid, and there were then introduced 4.5 cc (31.5 mMols) of ethyl benzoate. This mixture was heated for 2 hours at 80°C and at the same temperature the liquid was separated; the solid residue was treated with 200 cc (1824 mMols) of $TiCl_4$ for 2 hours at 90°C,

8

whereafter the catalytic solid was separated as in Example 27, thereby obtaining 11.5 g of catalyst component containing 2.9% of Ti.

The polymerization test of Example 27 was repeated but using 0.064 g of catalytic solid, and there were obtained 390 g of polypropylene (see Table 5).

TABLE 1

| Example No. | TiCl₃ mols (*) | MgCl₂ mols (*) | EtOH mols (*) | Decomposition agent | | Ti % | POLYMERIZATION OF ETHYLENE | | | |
|---|---|---|---|---|---|---|---|---|---|---|
| | | | | Type | mols (*) | | Yield g/g Ti | MIE g/10 min. | $\frac{MIN}{MIE}$ | Bulk Density g/cm³ |
| 1 | 1.0 | 1.0 | 8.2 | $SiCl_4$ | 8.1 | 14.15 | 176,600 | 0.1 | 7.3 | 0.36 |
| 2 | 1.0 | 2.0 | 12.0 | ,, | 12.0 | 6.45 | 465,000 | 0.13 | 10.7 | 0.33 |
| 3 | 1.0 | 4.0 | 20.2 | ,, | 20.0 | 2,8 | 409,000 | 0.16 | 8.4 | 0.38 |
| 4 | 2.0 | 1.0 | 15.2 | ,, | 15.6 | 19.1 | 69,300 | 0.18 | 8.61 | 0.39 |
| 5 | 1.0 | 1.0 | 8.2 | ,, | 4.1 | 14.3 | 88,600 | 0.11 | 7.3 | 0.33 |
| 6 | 1.0 | 1.0 | 8.2 | ,, | 16.2 | 15.0 | 159,600 | 0.30 | 8.05 | 0.40 |
| 7[1] | 1.0 | 1.0 | 12.3 | ,, | 12.4 | 16.0 | 48,000 | 0.65 | 8.15 | 0.40 |
| 8 | 1.0 | 2.0 | 12.1 | $AlCl_3$ | 6.0 | 11.35 | 135,600 | 0.18 | 10.0 | 0.25 |
| 9 | 1.0 | 2.0 | 12.2 | $AlEt_3$ | 6.1 | 9.65 | 121,000 | 0.12 | 11.5 | 0.32 |
| 10[2] | 1.0 | 1.0[2] | 10.2 | $SiCl_4$ | 10.3 | 12.25 | 163,000 | 0.32 | 8.15 | 0.31 |

(1) As a solvent there is used trichloroethylene instead of 1,2-dichloroethane.

(2) There is used Mg(OEt)Cl instead of $MgCl_2$.

(*) the numbers reported in the table indicate only the molar ratios between reactants.

0 010 746

TABLE 2

| Example No. | TiCl₃ ARA | | | | MgCl₂ | | | | Decomposition agent | | Ti % | POLYMERIZATION OF ETHYLENE | | | |
|---|---|---|---|---|---|---|---|---|---|---|---|---|---|---|---|
| | TiCl₃ mols (*) | ROH | mols (*) | Solvent | MgCl₂ mols (*) | R'OH | mols (*) | Solvent | Type | mols (*) | | Yield g/g Ti | MIE g/10 min. | $\frac{MIN}{MIE}$ | Bulk Density g/cm³ |
| 11(1) | 1 | n-BuOH | 4 | Dichloro-ethane | 2 | n-BuOH | 4 | Dichloro-ethane | SiCl₄ | 23.6 | 5.55 | 531,000 | 0.21 | 9.78 | 0.39 |
| 12 | 1 | n-BuOH | 4.1 | Dichloro-ethane | 1.9 | I-AmOH | 4.4 | Dichloro-ethane | SiCl₄ | 20.2 | 10.8 | 201,000 | 0.21 | 10.2 | 0.35 |
| 13 | 1 | 2-Et-hexanol | 5 | Toluene | 0.66 | 2-Et-hexanol | 4.6 | Toluene | SiCl₄ | 13.5 | 9.45 | 144,700 | 0.62 | 8.8 | 0.35 |
| 14 | 1 | 2-Et-hexanol | 5 | Toluene | 4.9 | 2-Et-hexanol | 4.0 | Hexane | AlEt₂Cl | 13.8 | 2.8 | 807,000 | 0.30 | 9.2 | 0.32 |
| 15 | 1 | Phenol | 10.2 | Dichloro-ethane | 1 | EtOH | 4.1 | Dichloro-ethane | SiCl₄ | 8.1 | 13.3 | 247,600 | 0.20 | 9.2 | 0.28 |
| 16 | 1 | n-BuOH | 4 | Dichloro-ethane | 1 | — | — | — | SiCl₄ | 4.0 | 13.35 | 70,700 | 0.12 | 10.8 | 0.30 |
| 17 | 1 | 2-Et-hexanol | 3.5 | Iso-par G®(2) | 1.5 | 2-Et-hexanol | 3.5 | Iso-par G(2) | TiCl₄ | 69.4 | 12.1 | 501,900 | 0.038 | 13.15 | 0.29 |
| 18 | 1 | Diphenyl-silandiol | 4 | Dichloro-ethane | 1 | EtOH | 4 | Dichloro-ethane | SiCl₄ | 12.0 | 15.35 | 28,900 | 0.11 | 10.0 | 0.26 |

(1) There is used delta-TiCl₃ HR (from TiCl₄ by reduction with H₂ and activation).

(2) A diluent consisting of a mixture of isoparaffinic hydrocarbons boiling in the range of 158 — 172°C and sold by Esso Chemical Co.

(*) The reported numbers indicate only the molar ratios between the reactants.

TABLE 3

| Example No. | TiCl$_3$ mols (*) | MgCl$_2$ mols (*) | C$_2$H$_5$OH mols (*) | Decomposition agent | | Ti % | POLYMERIZATION OF ETHYLENE | | | |
|---|---|---|---|---|---|---|---|---|---|---|
| | | | | Type | mole (*) | | Yield g/g Ti | MIE g/10 min. | $\dfrac{MIN}{MIE}$ | Bulk Density g/cm$^3$ |
| 19 | 1 | — | 6.2 | SiCl$_4$ | 6.2 | 28.5 | 1,400 | 0.14 | 12.5 | 0.26 |
| 20 | 1 | 1 | 5.1 | SiCl$_4$ | 5.1 | 15 | 144,000 | 0.11 | 10 | 0.38 |
| 21 | 1 | 1 | 8.2 | TiCl$_4$ | 8.1 | 19 | 257,000 | 0.15 | 10.5 | 0.35 |
| 22 | 1 | 2 | 12.0 | TiCl$_4$ | 12.0 | 14.35 | 650,000 | 0.146 | 9.8 | 0.28 |

(*) The numbers reported in the table indicate only the molar ratios between the reactants.

0 010 746

TABLE 4

| Example No. | $VCl_3$ mols (*) | $TiCl_3$ mols (*) | $Ti(O\text{-}n\text{-}Bu)_3$ mols (*) | $MgCl_2$ mols (*) | $C_2H_5OH$ mols (*) | Decomposition agent | | Ti% and V% | Polymerization of ethylene | | | |
|---|---|---|---|---|---|---|---|---|---|---|---|---|
| | | | | | | Type | mols (*) | | Yield g/g(Ti+V) | MIE g/10 min. | $\dfrac{MIN}{MIE}$ | Bulk density g/cm$^3$ |
| 23 | — | — | 1 | 1 | 4 | $SiCl_4$ | 4 | 11.75 — | 78,900 | 0.07 | 13.3 | — |
| 24 | 1 | — | — | 1 | 11.1 | $SiCl_4$ | 11.2 | — 14.05 | 32,200 | 95 | — | — |
| 25 | 1 | 1 | — | 2 | 21.0 | $SiCl_4$ | 21.0 | 1.3 9.65 | 305,300 | 0.24 | 8.12 | 0.39 |
| 26 | 1 | — | — | 1 | 8.2 | $TiCl_4$ | 8.2 | 7.2 13.55 | 158,300 | 0.14 | 10.1 | — |

(*) The reported numbers indicate only the molar ratios between the reactants.

0 010 746

TABLE 5

| Example No. | TiCl$_3$ mols (*) | MgCl$_2$ mols (*) | 2-Ethyl-hexanol mols (*) | Ethyl benzoate mols (*) | Decomposition agent | | Ti % | Polymerization of propylene | | | |
|---|---|---|---|---|---|---|---|---|---|---|---|
| | | | | | Type | mols (*) | | Yield g/g Ti | Isotacticity Index | Intrinsic Viscosity dl /g | Bulk density g/cm$^3$ |
| 27 | 1 | 10 | .33 | 5 | AlEt$_2$Cl | 50 | 3.8 | 50,000 | 80 | 1.79 | 0.37 |
| 28 | 1 | 25 | 65 | 10.8 | TiCl$_4$ | 1367 | 2.9 | 210,000 | 93 | 2.37 | 0.43 |

(*) The reported numbers indicate only the molar ratios between the reactants.

0 010 746

**Claims**

1. Components of catalysts for the polymerization of olefines, consisting of the product that is obtained by reacting in an apolar solvent:

a) the product of the reaction between:

a.1) a compound of trivalent Ti or V of the formula $MeR_nX_{3-n}$, wherein Me is Ti or V, R is a group OR', $NR'_2$ or OCOR' wherein R' is an alkyl, cycloalkyl or aryl with from 1 to 12 carbon atoms, X is halogen and $0 \leq n \leq 3$;

a.2) an organic compound containing at least one OH group selected from aliphatic, cycloaliphatic and aromatic alcohols or thioalcohols with from 1 to 18 carbon atoms, phenols and thiophenols with from 6 to 18 carbon atoms, and silanols $R'_pSi(OH)_{4-p}$ wherein R' has the meaning already indicated, and $1 \leq p \leq 3$, and

a.3) a Mg compound selected from Mg oxide, Mg hydroxide, Mg salts of oxygen containing inorganic acids and compounds $R''_qMgX_{2-q}$, wherein R'' is a group OR' OH or OCOR', wherein R' has the meaning indicated above, X is halogen, and $0 \leq q \leq 2$; with

b) a compound capable of reacting with the OH groups of compound a.2) when the Mg compound is a dihalide, and of reacting with such groups and contemporaneously converting at least part of the Mg compound to dihalide when the Mg compound is other than a dihalide whereby compound a.2) is used in quantities of at least 2 and up to 50 moles per mole of Ti compound a.1), the ratio in moles between compounds a.1) and a.3) ranges from 1:50 to 10:1 and compound b) is used in quantities greater than 0.2 moles per mole of compound a.2).

2. Catalyst components according to claim 1, consisting of the product that is obtained by reacting:

a) the product of the reaction between $TiCl_3$, a hydroxyl compound selected from aliphatic alcohols with from 2 to 8 carbon atoms and phenol, and $MgCl_2$; with

b) a compound selected from $SiCl_4$, $Cl_3SiCH_3$, $ClSi(CH_3)_3$, $Cl_3SiH$, $TiCl_4$, $AlCl_3$, $Al(C_2H_5)_2Cl$, $Al(C_2H_5)Cl_2$, $Al(C_2H_5)_3$, $SnCl_4$, $BCl_3$ and hydrogen halides.

3. Catalysts for the polymerization of ethylene or mixtures thereof with minor amounts of alpha-olefins $CH_2=CHR_1$ wherein $R_1$ is an alkyl with from 1 to 8 carbon atoms, obtained by reaction of a catalyst component according to claims 1 and 2 with a metallorganic aluminium compound selected from Al-trialkyls and Al-alkyl halides.

4. Catalyst components according to claim 1, containing in a chemically combined form an electron-donor compound in an amount comprised between 0.2 and 3 moles per g-atom of Ti or V.

5. A catalyst for the polymerization of alpha-olefins $CH_2=CHR_2$ wherein $R_2$ is an alkyl or aryl radical with from 1 to 8 carbon atoms, or mixtures thereof with minor proportions of ethylene, obtained by mixing a catalyst component as defined in claim 4 with an Al-alkyl compound.

6. Process for the polymerization of ethylene or mixtures thereof with minor amounts of alpha-olefines $CH_2=CHR_1$ wherein $R_1$ is an alkyl with from 1 to 8 carbon atoms, characterized in that the polymerization is carried out in the presence of a catalyst according to claim 3.

7. A process for the polymerization of alpha-olefins $CH_2=CHR_2$ wherein $R_2$ is an alkyl or aryl radical with from 1 to 8 carbon atoms, characterized in that the polymerization is carried out in the presence of a catalyst according to claim 5.

**Revendications**

1. Composants de catalyseurs pour la polymérisation des oléfines, constitués du produit que l'on obtient en faisant réagir dans un solvant apolaire:

a) le produit de la réaction entre:

a.1) un composé de Ti ou V trivalent de formule $MeR_nX_{3-n}$ dans laquelle:

Me représente Ti ou V;

R représente un group OR', $NR'_2$ ou OCOR' dans lequel R' est un radical alkyle, cycloalkyle ou aryle comportant de 1 à 12 atomes de carbone;

X représente un oxygène; et,

$0 \leq n \leq 3$;

a.2) un composé organique contenant au moins un groupe OH choisi dans les alcools ou thioalcools aliphatiques, cycloaliphatiques et aromatiques possédant de 1 à 18 atomes de carbone, les phénols et thiophénols comportant de 6 à 18 atomes de carbone, et les silanols $R'_pSi(OH)_{4-p}$ dans lesquels R' a signification déjà indiquée et $1 \leq p \leq 3$, et

a.3) un composé de Mg choisi parmi l'oxyde de Mg et l'hydroxyde de Mg, les sels de Mg d'acides minéraux contenant de l'oxygène et des composés $R''_qMgX_{2-q}$, dans lesquels:

R'' est un groupe OR', OH ou OCOR', dans lesquels R' a la signification indiquée ci-dessus;

X représente un oxygène; et, $0 \leq q \leq 2$; avec

b) un composé capable de réagir avec les groupes OH du composé a.2) lorsque le composé de Mg est un dihalogénure, et de réagir avec ces groupes et de transformer simultanément au moins une partie du composé de Mg en dihalogénure lorsque le composé de Mg est autre q'un dihalogénure, le composé a.2) étant utilisé en quantité d'au moins 2 et inférieur à 50 moles par mole de composé de Ti a.1), le rapport en moles entre les composés a.1) et a.3) allant de 1/50 à 10/1 et le composé b) étant utilisé en quantité supérieure à 0,2 mole par mole de composé a.2).

2. Composants de catalyseur suivant la revendication 1, caractérisés en ce qu'il est constitué du produit obtenu en faisant réagir:

a) le produit de la réaction entre $TiCl_3$, un composé hydroxyle choisi parmi les alcools aliphatiques comportant de 2 à 8 atomes de carbone et le phénol, et $MgCl_2$; avec

b) un composé choisi parmi $SiCl_4$, $Cl_3SiCH_3$, $ClSi(CH_3)_3$, $Cl_3SiH$, $TiCl_4$, $AlCl_3$, $Al(C_2H_5)_2Cl$, $Al(C_2H_5)Cl_2$, $Al(C_2H_5)_3$, $SnCl_4$, $BCl_3$ et les halogénoacides.

3. Catalyseurs pour la polymérisation de l'éthylenène ou de mélanges de celui-ci avec des quantités mineures d'alpha-oléfines $CH_2=CHR_1$ dans lesquelles $R_1$ est un alkyle comportant de 1 à 3 atomes de carbone, obtenus par la réaction d'un composant de catalyseur suivant les revendications 1 et 2 avec un composé organo-métallique d'aluminium choisi parmi les trialkyl-aluminium et les halogénures d'alkyl-aluminium.

4. Composants de catalyseur suivant la revendication 1, caractérisés en ce qu'ils comprennent sous une forme chimiquement combinée un composé donneur d'électrons en quantité comprise entre 0,2 et 3 moles par atomegramme de Ti ou V.

5. Catalyseur de polymérisation des alpha-oléfines $CH_2=CHR_2$ dans lesquelles $R_2$ est un radical alkyle ou aryle comportant de 1 à 8 atomes de carbone et des mélanges de celle-ci avec des proportions mineures d'éthylène, obtenu en mélangeant un composé de catalyseur tel que défini dans la revendication 4 avec un composé d'alkyl-aluminium.

6. Procédé de polymérisation de l'éthylène ou de mélanges de celui-ci avec des quantités mineures d'alpha-oléfines $CH_2=CHR_1$ dans lesquelles $R_1$ est un alkyle comportant de 1 à 8 atomes de carbone, caractérisé en ce que la polymérisation est effectuée en présence d'un catalyseur suivant la revendication 3.

7. Procédé de polymérisation d'alpha-oléfines $CH_2=CHR_2$ dans lesquelles $R_2$ est un radical alkyle ou aryle comportant de 1 à 8 atomes de carbone, caractérisé en ce que la polymérisation est effectuée en présence d'un catalyseur suivant la revendication 5.

## Patentansprüche

1. Katalysatorkomponenten zur Polymerisation von Olefinen, bestehend aus dem Produkt, das erhalten wird durch Umsetzung in einem apolaren Lösungsmittel von:

a) dem Reaktionsprodukt aus:

a.1) einer Verbindung von dreiwertigem Ti oder V der Formel $MeR_nX_{3-n}$, worin Me Ti oder V ist, R eine Gruppe $OR'$, $NR'_2$ oder $OCOR'$ ist, worin $R'$ Alkyl, Cycloalkyl oder Aryl mit 1 bis 12 Kohlenstoffatomen bedeutet, X Halogen ist und $0 \leq n \leq 3$;

a.2) einer organischen Verbindung mit zumindest einer OH-Gruppe, ausgewählt unter aliphatischen, cycloaliphatischen und aromatischen Alkoholen oder Thioalkoholen mit 1 bis 18 Kohlenstoffatomen, Phenolen und Thiophenolen mit 6 bis 18 Kohlenstoffatomen und Silanolen $R'pSi(OH)_{4-p}$, worin $R'$ die angegebene Bedeutung besitzt und $1 \leq p \leq 3$ und

a.3) einer Mg-Verbindung, ausgewählt unter Mg-Oxid, Mg-Hydroxid, Mg-Salzen von Sauerstoff enthaltenden anorganischen Säuren und Verbindungen $R''_qMgX_{2-q}$, worin $R''$ eine Gruppe $OR'$, OH oder $OCOR'$ bedeutet, worin $R'$ die vorstehend angegebene Bedeutung besitzt, X Halogen ist und $0 \leq q \leq 2$, mit

b) einer Verbindung, die zur Umsetzung mit den OH-Gruppen der Verbindung a.2) befähigt ist, wenn die Mg-Verbindung ein Dihalogenid ist, und die befähigt ist zur Umsetzung mit derartigen Gruppen und zur gleichzeitigen Umwandlung von zumindest einem Teil der Mg-Verbindung in das Dihalogenid, wenn die Mg-Verbindung verschieden ist von einem Dihalogenid, wobei die Verbindung a.2) in Mengen von zumindest 2 und bis zu 50 Molen je Mol Ti-Verbindung a.1) verwendet wird, das Molverhältnis zwischen den Verbindungen a.1) und a.3) 1:50 bis 10:1 beträgt und die Verbindung b) in Mengen von größer als 0,2 Mol je Mol Verbindung a.2) verwendet wird.

2. Katalysatorkomponenten gemäß Anspruch 1, bestehend aus dem Produkt, das erhalten wird durch Umsetzung:

a) des Reaktionsprodukts aus $TiCl_3$, einer Hydroxylverbindung, ausgewählt unter aliphatischen Alkoholen mit 2 bis 8 Kohlenstoffatomen und Phenol und $MgCl_2$; mit

b) einer Verbindung, ausgewählt unter $SiCl_4$, $Cl_3SiCH_3$, $ClSi(CH_3)_3$, $Cl_3SiH$, $TiCl_4$, $AlCl_3$, $Al(C_2H_5)_2Cl$, $Al(C_2H_5)Cl_2$, $Al(C_2H_5)_3$, $SnCl_4$, $BCl_3$ und Halogenwasserstoffen.

3. Katalysatoren zur Polymerisation von Äthylen oder deren Mischungen mit geringeren Anteilen an $\alpha$-Olefinen $CH_2=CHR_1$, worin $R_1$ eine Alkylgruppe mit 1 bis 8 Kohlenstoffatomen bedeutet, erhalten durch Umsetzung einer Katalysatorkomponente gemäß den Ansprüchen 1 und 2 mit einer metallorganischen Aluminiumverbindung, ausgewählt unter Al-Trialkylen und Al-Alkylhalogeniden.

4. Katalysatorkomponenten gemäß Anspruch 1, enthaltend in chemisch gebundener Form eine Elektronendonorverbindung in einer Menge zwischen 0,2 und 3 Mol je g-Atom Ti oder V.

5. Katalysator zur Polymerisation von $\alpha$-Olefinen $CH_2=CHR_2$, worin $R_2$ ein Alkyl- oder Arylrest mit 1 bis 8 Kohlenstoffatomen ist oder von deren Mischungen mit geringeren Anteilen an Äthylen, erhalten durch Mischen einer Katalsatorkomponente gemäß Anspruch 4 mit einer Al-Alkylverbindung.

6. Verfahren zur Polymerisation von Athylen oder dessen Mischungen mit geringeren Anteilen an $\alpha$-Olefinen $CH_2=CHR_1$, worin $R_1$ eine Alkylgruppe mit 1 bis 8 Kohlenstoffatomen darstellt, dadurch gekennzeichnet, daß die Polymerisation in Gegenwart eines Katalysators gemäß Anspruch 3 durchgeführt wird.

7. Verfahren zur Polymerisation von $\alpha$-Olefinen $CH_2=CHR_2$, worin $R_2$ eine Alkyl- oder Arylgruppe mit 1 bis 8 Kohlenstoffatomen ist, dadurch gekennzeichnet, daß die Polymerisation in Gegenwart eines Katalysators gemäß Anspruch 5 durchgeführt wird.